(19) Europäisches Patentamt / European Patent Office / Office européen des brevets

(11) **EP 2 797 041 A1**

(12) **EUROPEAN PATENT APPLICATION**

(43) Date of publication:
**29.10.2014  Bulletin 2014/44**

(51) Int Cl.:
**G06Q 10/04** $^{(2012.01)}$

(21) Application number: **13425063.8**

(22) Date of filing: **26.04.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Università Del Salento - Dipartimento Di Ingegneria Dell'Innovazione
73100 Lecce (LE) (IT)**

(72) Inventors:
• **Di Sabatino, Silvana
73100 Lecce (IT)**
• **Leo, Laura Sandra
73043 Copertino (LE) (IT)**

(74) Representative: **Bruni, Giovanni
Laforgia, Bruni & Partners
Via Duca Degli Abruzzi 78
10129 Torino (IT)**

(54) **Method for estimating pollutant concentration of urban environments using fluid-dynamics clustering**

(57)    Method for estimating the pollutant concentration in an urban agglomerate comprising the steps of: acquiring a digital elevation model of the ground; definition of a group of pollutant sources; definition of the wind direction and speed; computation of the density of planar and frontal area of the buildings and so of the horizontal and vertical free surface; computation of the vertical and horizontal mass flow by multiplying, for each area in which the wind speed is considered constant, the wind speed by the free surface perpendicular thereto; computation of the residence time $\tau_p$ (pollutant average age) and determination of the residence maps of the pollutant for a given city or portion thereof.

Figura 5

**Description**

The present invention relates to a method for the analysis of the complex urban morphometry which allows the aerodynamic properties of an urban agglomeration to be represented in a direct and univocal way, and more in particular of their influence on the conditions of ventilation and air quality of a city (or portion thereof) by means of simple parameters. Through the method described, the geometrical complexity of a city is described accurately with a limited quantity of easily manageable parameters, allowing their simple implementation in the computing model.

It is to be précised that here with morphometry it is intended the measure of the buildings shape and with clustering it is intended the subdivision of cities in "dynamically" equivalent blocks. Each block represents a quarter or however a physically distinguishable area in the city.

According to another aspect, the present invention relates to a method for estimating the potential of ease of breathing of an urban agglomeration (a city or a portion thereof). With ease of breathing it is intended the capacity of diluting a pollutant which is released or transported in the urban atmosphere. In the urban agglomerations there are a plurality of pollutant sources, among which the most important one is surely the traffic. Other pollutant sources can be the domestic heating systems or the emissions of handicraft or commercial activities.

The dilution (diffusion) and transport in atmosphere in urban environment of the emissions, and in particular of the traffic ones cannot be treated easily with the models generally used for the industrial sources which are typically conveyed in chimneys with emission point well above the average of the buildings. On the contrary, the motor vehicles emissions occur at ground level and therefore the spatial density, height and building outline in the immediate surroundings exert a relevant impact on the pollutant accumulation in a determined urban area.

Once released in the atmosphere, in fact, the pollutant charge is in a turbulent flow field in which the average speed of air and the turbulence parameters strongly depend on the buildings outline and the weather conditions. Currently, there are not known computing methods which allow, by using a suitable parameterization of the enunciated variables, the interactions between the intrinsic characteristics of the urban agglomeration (only depending, as it is explained better in the following, on the same structure), the contemporaneous presence of a determined quantity of pollutant sources (each characterized by a specific pollutant charge and by its own position, possibly variable in time) and the weather conditions to be considered simply.

Therefore aim of the present invention is to provide a method which, on the basis of the just expressed considerations, allows the dilution potential and more in particular the determination of the maximum concentration thresholds of a given pollutant in a given urban agglomeration to be estimated knowing the characteristics of the present pollutant sources. The dilution capacity is determined by the buildings and roads outline, and the final concentration of pollutants depends on the characteristics of the sources (number, rate, concentration) and on the weather conditions. As the concentration thresholds are typically provided by the current law, the method according to the present invention allows to compute the maximum pollutant emissions when the weather conditions vary in a given urban area or portion thereof in order to observe the concentration thresholds provided by law.

The method according to the present invention comprises two steps. The first step comprises a method based on the image analysis for determining the parameters of shape of the city, and the second step comprises the computation of new fluid dynamic variables useful to define the urban ease of breathing.

Concerning the image analysis it is known that the technique is widely applicable in various fields including the study of the urban micro-weather, the diffusion of substances at gaseous state and of particulate material, the management of the emergencies associated to the release of hazardous substances. Common to the various application fields is the presence of a fluid in a turbulent state, the atmosphere, which interacts with the surfaces of the buildings. It is clear that the interaction between atmosphere and buildings is a very complex physical phenomenon. An effective method of representation of the aerodynamically relevant characteristics of the buildings allows the development of plans for impact mitigation, environmental management, emergency management and urban planning. In particular, from intra-urban scales up to the city scale, the use of the parameters described in the following in place of a detailed description of the urban outline of the buildings allows the development of models of flow and dispersion in urban environment which can result "fast response" (therefore more easily usable than the low scale models currently known) and which, so, are apt to manage the emergencies; at the same time with respect to the meso-scale models and to the higher spatial scales, the use of the parameters described in the following in place of the roughness length allows to consider the perturbations induced by the presence of urban agglomerations more realistically. Therefore the method provided influences positively also strategic applications of urban planning, sustainable development and air quality. For example, the method can be used for estimating the ventilation areas of cities. This evaluation can be used as means for planning new quarters. Considering, in fact, the existing buildings, by means of the provided method it is possible to estimate how the construction of new buildings alters the ventilation and dispersion conditions of the pollutants. In this way it is possible to determine the optimal position and shape of new buildings, which improve the existing conditions. Moreover, the method allows to estimate the skyview factor which is fundamental for determining the solar radiation quantity effectively absorbed in the area of interest. This computation can be used for the cities energy estimations.

In the study of wind field and pollutant diffusion the parameterization of turbulence is important at the various considered scales. Rotach (1995), Roth (2000) and Macdonald et al. (2000) highlighted how the dynamic quantities can be ascribed to the morphometric parameters concerning clusters of buildings and which form the group of quarters which make up a city (Grimmond and Oke, 1999). Various "lambda" parameters, such for example the density of built planar area with respect to the total one ($\lambda_p$) and the density of frontal area ($\lambda_f$) can be used to distinguish the characteristics of flow regimes which develop in an urban area. In literature there are models, both fluid dynamic and meteorological, in which the parameterization of an urban area is based on morphological parameters (Brown, 2000).

However, at the state of the art a systematic and validated method for the definition and the computation of morphometric parameters is not provided, and above all so far it has not been considered the possibility to introduce parameters variable according to space, and so able to represent the spatial variability intrinsic to a city in its extension in each of the three spatial dimensions. In addition, in a "synthetic" vision of the city no efforts have been done to combine these parameters usefully. The method here provides a strong impulse to all the applications which need to use the morphometric details in an urban environment.

In such a contest, it is crucial to individuate the criteria needed to represent effectively the complex "city system" in the operational numeric models of flow and dispersion. In fact, the geometry of the buildings, the dimensions of the roads, the area density occupied by the same buildings, as well as the heat stratification can influence the wind locally and as a consequence the dilution power of possible present pollutant and/or hazardous substances.

Clearly the possibility to synthetize the characteristics of urban agglomerations in a careful but easily manageable way in the computing models is very useful in formulating the sustainable urban development plans to which the government bodies ever more pay attention at national and international level.

In the method according to the present invention the computation of morphometric parameters relevant for the description of the wind field and the dispersion starts from the analysis of digital elevation models ("DEM") of a city or portions thereof by applying techniques of image analysis. A digital elevation model ("DEM") is a database containing the coordinates of the buildings in the three directions of space at a given resolution. Currently, for some cities, there exist urban "DEMs" with resolution up to one centimeter.

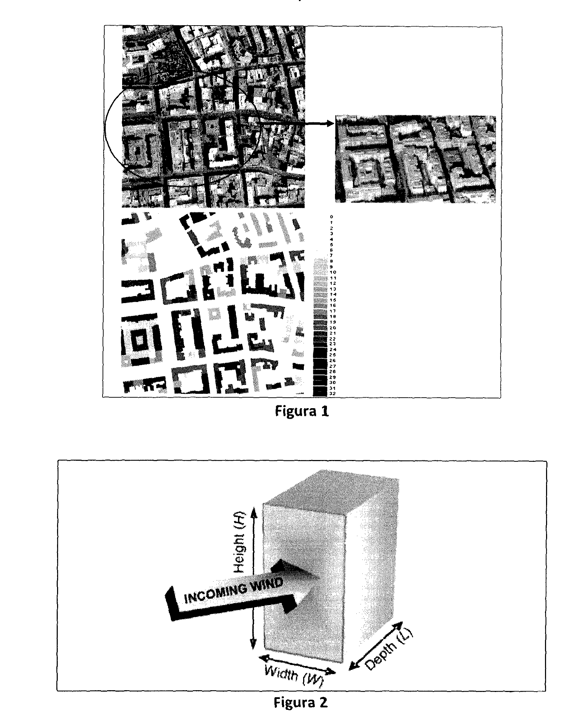

An urban "DEM" can be conveniently converted in a raster image in grey tones; in such a way the spatial arrangement of pixels allows to reconstruct the whole layout plan of the city (giving information about coordinates x and y) while the numeric value assigned to the single pixel, i.e. its grey tone, identifies a value of length with respect to the ground. In this way a single raster image contains a complete description in three dimensions of the urban surface on a bi-dimensional support as the digital image. An example is given in figure 1, where it is shown the "DEM" converted in raster image realized for a portion of the city Lecce, with dimensions 400m x 400m.

The analysis of urban "DEMs" as those in figure 1 can be clearly carried out by means of numeric codes developed in various operational environments, without departing from the present invention. As a way of example an operational environment usable for the development is the Matlab© Image Processing Toolbox (MATLAB 1997). Once obtained the "DEM", i.e. an image in grey scale in which to each pixel it is associated the building height with respect to the ground, it is possible to compute the density of planar area ($\lambda_p$), i.e. the ratio between constructed area and not constructed area, defined as:

$$\lambda_P = \frac{Constructed\ area}{DEM\ Total\ Area} \qquad (1)$$

The computation of the $\lambda_p$ parameter can be carried out while having the digital model, in the following way:

$$\lambda_P = \frac{Number\ of\ pixel\ with\ value > 0}{Total\ Image\ Pixel\ Number} \qquad (2)$$

It is to be observed that a raster image in grey tones is equivalent to a matrix of suitable dimensions, in which each cell corresponds to a pixel of the image. The equations 1) and 2) define the algorithm for computing the density of planar area (ratio between constructed area and not constructed area) whose implementation implies a computational difficulty which depends exclusively on the number of pixel of the image and not on the geometrical complexity of the urban environment. So, it is possible to process hectares of a city at the same time, which is impossible with the traditional geometric models.

Conveniently the average height (Haverage) of the buildings can be computed as well. Since the raster image is equivalent to a matrix (M) in which each element has a number proportional to the height whose maximum value (for example the value 255 in an image at 256 grey level) represents a reference height Href (for example the maximum height of the buildings present in the image) and the zero is associated to the zero height (so the ground), the algorithm for the computation of the average height of the buildings is described in the following steps:

a) determination of the factor of proportionality (k) between numbers in matrix (M) and real heights, dividing the reference height (Href) by the maximum value present in "DEM";
b) computation of the average value (haverage) of all the elements in the matrix having value other than zero;
c) computation of the average value of the physical height (Haverage) of the buildings by multiplying the average of the elements of the matrix (haverage) by the factor of proportionality (k) individuated in step a).

In addition to the density of planar area and the average height of the buildings, it is possible to compute other morphometric parameters from an aerodynamic point of view, and in particular the density of frontal area ($\lambda_f$) defined as the ratio between the surface of the frontal area of the buildings, measured in orthogonal direction to the wind direction, and the plan surface of the portion of the urban agglomerate taken in consideration in the image. As it is shown graphically in figure 2, the density of frontal area depends on the wind direction.

The algorithm for computing the density of frontal area comprises the following steps:

a) definition of a wind direction defined by an angle (alfa) formed between the wind direction and a reference direction;
b) determination of the building edges by means of the analysis of matrix (M).
A cell of the matrix (M) is considered as containing the edge of a building if the value of at least a cell adjacent thereto is zero.
c) Definition of a new matrix (F), of the same dimensions as matrix (M), containing in each cell a value of the corresponding cell of matrix (M) if this cell contains an edge, otherwise the value zero. The matrix (F) contains the edges of the buildings and defines the relative façades in the directions x and y;
d) Computation of the surfaces of the building façade in the directions x and y, as sum of lines and columns, of the values of the cells individuated as containing the edges of matrix F;
e) orthogonal projection of the surfaces whose area was computed in step d) along the direction perpendicular to the direction determined in step a), multiplying the value of the surface by the cosine of angle (alfa) computed in step a). This operation determines the surface of the façades resisting to the wind.
f) Computation of the density of frontal area, defined as the ratio between the sum calculated in step a) and the plan surface of the zone considered.

The computation of the three parameters $H$, $\lambda_p$ and $\lambda_f$ is sufficient for deriving immediately the roughness length and the displacement height as well by means of formulations available in literature.

The use of these parameters allows also other types of information to be obtained about the city considered as a whole.

Defining as shape of a building the ratio between the average of its sides in plan and its height, by means of a suitable combination of parameters previously computed it is possible to determine the average shape of buildings of a specific city, defined as:

$$\frac{\overline{B}^2}{\overline{H}\,\overline{B}} = \frac{\overline{B}}{\overline{H}} \sim \frac{\lambda_p}{\lambda_f(\theta)} \; , \qquad\qquad (3)$$

where:

- $\overline{B}$ is the average of width and depth (W and L in figure 2)
- $\overline{H}$ is the average height
- $\overline{\lambda_f(\theta)}$ represents the value of the density of frontal area between all the wind direction $\theta$.

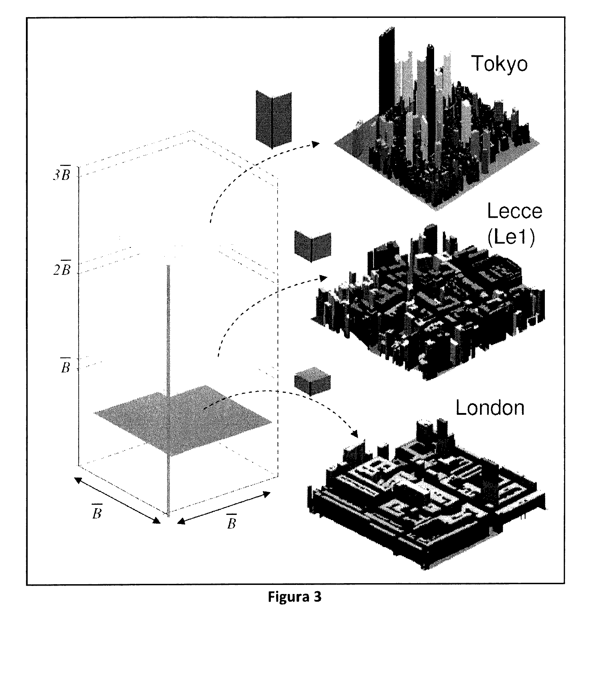

Figure 3 shows graphically some computation examples of the parameters described on the basis of the $\lambda_f$ and $\lambda_p$ values calculated for portions of some DEMs of real cities. From the analysis of figure 3 it is observed that, with respect to the analyzed area, Tokyo is characterized by high and narrow buildings, Lecce is characterized by approximately cubic buildings, London by low and wide buildings.

This piece of information is obtained exclusively from the "DEM" analysis, through the derivation of the only lambda parameters and the following computation of the ratio (3).

In order to carry out lower scale estimations it is instead fundamental to consider the characteristics of heterogeneity and variability, which characterize the urban layout both in its horizontal and vertical development. In particular, the method according to the present invention allows to determine the morphometric parameters as a function of the three spatial coordinates (x, y, z), or any of them, according to the specific application, according to what described. Computation of the density of frontal area ($\lambda_f$) according to the height z

The key element in the algorithm used to compute $\lambda_f$ at a given wind direction $\vartheta$ and a given height z is the computation of the total area associated to the façades of the buildings on which the wind impacts and the variation according to the height of the density of frontal area, $\lambda_f(z,\vartheta)$, defined as:

$$\lambda_f(z,\theta) = \frac{\sum_i dA_{f,i}(z,\theta)}{A_T} \qquad (4)$$

where $A_T$ is the plan surface of the area considered and $dA_{f,i}$ represents, for a given value of $\vartheta$ and with a fixed height increase $\Delta z$, the portion of frontal area comprised between z and z+ $\Delta z$ of the *i-th* building.

Therefore this parameter describes how a city or a quarter develops in height, indicating a greater or lower concentration of buildings at low or high heights, a homogeneous structure or extremely heterogeneous in the distribution of heights of the buildings etc...

The algorithm for computing the planar area according to the height is synthetized in the following logical steps:

a) definition of a positive integral counter "i", initialized with zero value;
b) determination of the $\Delta z$ vertical grid pitch (as a way of example equal to one meter). The grid pitch is linked also to the DEM resolution and represents the distance at which the various values of the density of frontal area are computed;
c) extraction from the original "DEM" matrix of a matrix F(i) containing only the cells whose numeric value is comprised between i*$\Delta z$ and (i+1)*$\Delta z$.
d) computation of $\lambda_f$(i) on the matrix F(i), according to the method previously described for the computation of the density of planar area. $\lambda_f$(i) represents the value of the density of planar area at height (i+1)*$\Delta z$.
e) counter i increase and repetition of the previous operation up to (i+1)*$\Delta z$ is equal to the maximum height of the buildings present in the "DEM".

The city mapping in terms of $\lambda_f$ allows to estimate the vertical distribution of the city and so the resistance of the wind at various heights.

Moreover, it is possible to analyze the variation of the shape of a city in horizontal direction along the direction x in which the wind blows, by means of the parameters $\lambda_f$(x) and $\lambda_p$(x), or along the perpendicular direction y, or the combination thereof.

This is important if it is thought for example that the atmospheric flow on a city develops continually and does not reach a state of instantaneous balance owing to the strong lack of homogeneity of the surface. By introducing the morphometric parameters which develop on the basis of the real urban geometry and its variations from a quarter to the other one or from a road to the other one, it is possible that this continuous development of the flow in the urban environment is considered and parameterized.

The algorithm for the computation of $\lambda_p$(x, y) and $\lambda_f$(x, y) is based on the same logic steps adopted in the formulation of the algorithm for the computation of $\lambda_f$(z).

It is needed to define prior the width along the directions x and y of the single DEAM areas in which $\lambda_p$ and $\lambda_f$ are to be computed. Therefore it is possible to extract as many sub-matrixes as the areas of interest are from the matrix M representative for DEM according to a horizontal grid pitch which can be constant or variable, and to repeat the computation of $\lambda_p$ and $\lambda_f$ on these matrixes.

Therefore according to this method it is possible to compute the values $\lambda_p$(x, y) and $\lambda_f$(x, y) and so it is possible to consider the spatial variability of the surface roughness applying the formulas known in literature for computing the roughness for each region defined by the coordinates x, y for which $\lambda_p$ and $\lambda_f$ were computed. Therefore the computation of the roughness length as function of (x, y) allows an urban area to be represented as quarters placed side by side having different roughness. This algorithm allows, for example, to introduce a growth law of the inner boundary-layer which considers the effective variation of roughness which characterizes different areas of the same city.

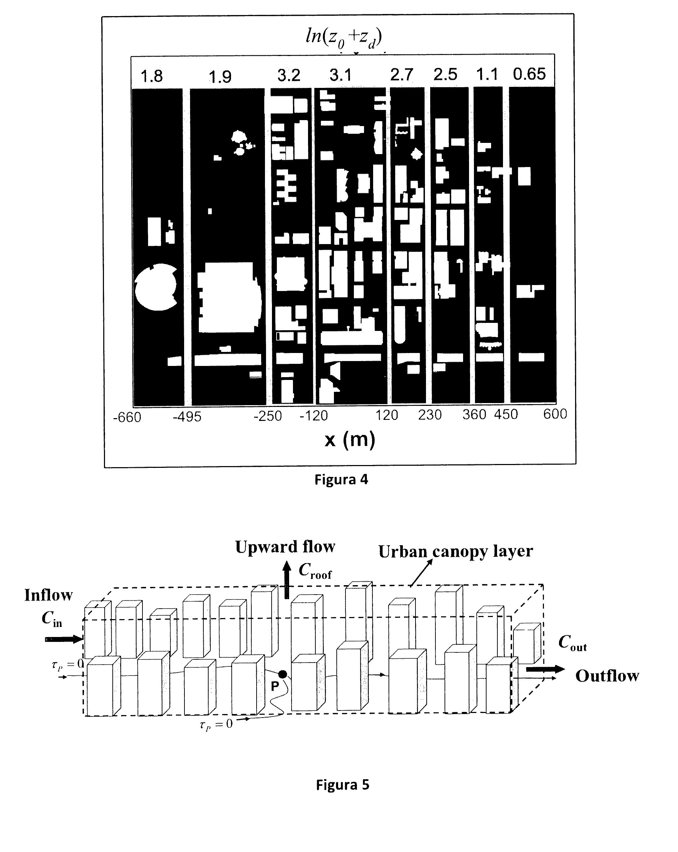

Figure 4 shows an example for the city of Oklahoma obtained by computing the roughness length and the displacement height starting from $\lambda_f(x, \vartheta)$, $\lambda_p(x)$ for values of $\Delta x$ equal to the distance between two successive roads perpendicular to the wind direction x, and for a value of $\Delta y$ equal to the extension along y of the area represented in the DEM.

As yet said one of the just described most interesting applications of the parameterization of the morphological characteristics of a city is the computing of the "residence time of a pollutant" emitted in an urban agglomerate. The flow field in an urban agglomerate is turbulent and so a pollutant emitted from a source present inside the urban agglomerate will follow the turbulent flow, tending to remain entrapped for a certain period of time in its own area of emission, prior to be dragged outside by the same. Clearly, the balance between the quantity of pollutants emitted in the area considered and the quantity of pollutants, which, at the same time, are dragged outside by the same, allows the concentration of pollutants present in the area considered, to be estimated. While an estimation of the pollutants emitted can be carried out, for example, by starting from the data about the traffic, currently no methods are available which allow to estimate rapidly and easily the quantity of pollutants dragged outside the urban area considered by considering the urban morphology and the weather conditions. This kind of information would allow for example to provide in real time accurate information about the pollution level expected for each quarter of an urban agglomerate, thus allowing the single individuals to plan their own routes and the relevant authorities to estimate the need to arrange planning measures (partial block of traffic, indications of preferred ways etc...) intended to improve, as much as possible, the air quality.

The just described parameterization of urban agglomerates allows, after computing the planar and frontal density, the flow in turbulent condition to be computed with a good spatial resolution. In this way, it is possible to define a horizontal mass flow (flow rate) (equivalent to the air flow rate which passes through the single roads or the junctions of the single roads at each height) and a vertical mass flow (equivalent to an air flow rate which from the urban canyons is released in the free atmosphere) using the expression:

$$q = \int_A \vec{V} \cdot \vec{n} \, dA \qquad (5)$$

where q is the mass flow, A is the area associated to the openings (both horizontal and vertical), V is the speed field which varies with the variations of the weather conditions, n is the versor normal to the surface. It is to be observed that the value of horizontal and vertical surface to be used in the computation is determined using the values $\lambda_p(x, y)$ and $\lambda_f(x, y)$ computed as above described. In this way it is possible to individuate the urban agglomerate in a synthetic way. Specifically for the horizontal flow rate computing the integration area (vertical free surface) can be computed as

$$A_H = \sum_{x=0}^{L} (1 - \lambda_f(x)) A_{tot,V} \qquad (6)$$

while for the vertical flow rate computing the integration area (horizontal free surface) can be computed as

$$A_V = \sum_{z=0}^{H_{max}} (1 - \lambda_p(z)) A_{tot,h} \qquad (7)$$

where $A_{tot,v}$ is the frontal area of the urban agglomerate considered in the direction perpendicular to the wind direction ($A_{tot,v}$ = W*Hmax where W is the extension of the agglomerate in the direction perpendicular to the wind direction while Hmax is the maximum height of the buildings), x=0 and x=L represent the extension limits of the area of interest along the direction x, considered equal to the wind direction. Similarly, $A_{tot,h}$ is the horizontal area of the urban agglomerate ($A_{tot,h}$ = W*L).

It is important to observe that this type of computation allows the mass flow to be computed both inside a specific quarter and in a whole city with the same method.

Therefore the estimation of the pollutants value according to the present method consists of the following steps:

1. acquiring a digital elevation model of the ground of an area of an urban agglomerate of interest;

2. definition of a group of pollutant sources present in the area of interest, for each of which it is defined the position, the type and the quantity of pollutant emitted;

3. definition of one or more weather conditions of interest, in terms of wind direction and speed according to the coordinates x and y;

The weather conditions can be representative of the current conditions of the area of interest, of the weather conditions expected shortly for the area of interest or can comprise a group of weather conditions which statistically occur in the area of interest.

4. computation of the density of surface area ($\lambda_p$(x, y)) according to the spatial coordinates x and y in this area according to the method just described, and successive computation of the horizontal free area;

5. computation of the density of frontal area ($\lambda_f$(x, y)) according to the wind direction and to the spatial coordinates according to the method just described and successive computation of the vertical free area;

6. determination of the maximum value of pollutant emissions possible from the sources defined in step 2 (worst scenario);

7. computation of the mass flow and so of the transport of pollutants horizontally (crossings and road junctions) and vertically (top of the road canyons) using the formula (5).

The computation can be carried out by multiplying, for each area in which the wind speed is considered constant, the wind speed by the free surface perpendicular thereto. The net transport computed as sum of horizontal and vertical mass flow is zero if there are not accumulations.

8. computation, for each area, of the residence time $\tau_p$ (pollutant average age) estimated as the ratio

$$\tau_p = \frac{C_P}{Q_u} \qquad (8)$$

between the pollutant concentration $C_P$ [M/L$^3$] in a given point associated to the maximum emission $Q_u$ [M/sL$_3$)] distributed uniformly. The residence time is high in little ventilated areas and low in very ventilated areas. The residence time is different from the mass flow since the nature of flow is turbulent and in presence of obstacles wakes and turbulent structures are formed, so the pollutants can reside long in a given area. Figure 5 shows the concept synthetically.

9. determination of the residence maps of the pollutant for a given city or portion thereof using $\lambda_p$(x, y, z) and $\lambda_f$(x, y, z) . It is to be reminded that $\lambda_f$(x, y, z) is a function of the wind direction.

With the residence maps of the pollutant of interest the pollutant C concentration can be estimated simply as:

$$C = \tau_p * m_e$$

where $m_e$ is the emission rate computed in step 6. If the value of the pollutant concentration obtained is greater than the permitted threshold it is needed to formulate other hypotheses of traffic or to differentiate the sources of emission.

**Claims**

1.  Method for estimating the pollutant concentration in an urban agglomerate comprising the following steps:

    1. acquiring a digital elevation model of the ground of an area of an urban agglomerate of interest;

    2. definition of a group of pollutant sources present in the area of interest, for each of which it is defined the position, the type and the quantity of pollutant emitted;

    3. definition of one or more weather conditions of interest, in terms of wind direction and speed according to the coordinates x and y;

    4. computation of the density of planar area of the buildings ($\lambda_p$(x, y)) according to spatial coordinates x and y in the area of interest, and successive computation of the horizontal free area;

    5. computation of the density of frontal area of the buildings ($\lambda_f$(x, y)) in direction orthogonal to the wind direction defined in step 3 and according to the spatial coordinates, and successive computation of the vertical free area;

    6. determination of the maximum value of pollutant emissions possible from the sources defined in step 2;

    7. computation of the horizontal and vertical mass flow by multiplying, for each area in which the wind speed is considered constant, the wind speed by the free surface perpendicular thereto.

8. computation, for each area, of the residence time $\tau_p$ (pollutant average age) estimated as the ratio between the pollutant concentration $C_P$ [M/L$^3$] in a given point associated to the maximum emission $Q_u$ [M/sL$_3$)] distributed uniformly.

9. determination of the residence maps of the pollutant for a given city or portion thereof using $\lambda_p(x, y, z)$ and $\lambda_f(x, y, z)$.

**2.** Method for estimating the pollutant concentration in an urban agglomerate according to claim 1, wherein the step 1 comprises the steps of:

1-a) acquiring a digital elevation model (DEM) of the urban agglomerate of interest;
1-b) extraction from said digital model of a matrix (M) containing, in each cell, the value of the corresponding cell of the digital elevation model (DEM).

**3.** Method for estimating the pollutant concentration in an urban agglomerate according to claim 2, **characterized in that** the density of planar area of the buildings $\lambda_p(x, y)$ is computed as the ratio between the number of the values of the matrix (M) other than zero and the total number of value comprised in the matrix.

**4.** Method for estimating the pollutant concentration in an urban agglomerate according to claim 2 or 3, **characterized in that** the density of of frontal area of the buildings ($\lambda_f(x, y)$) is computed according to the steps of:

5-a) computation of the angle (alfa) defined between the wind direction and a reference direction;
5-b) determination of the cells of the matrix (M) containing the edges of the buildings. A cell of the matrix (M) is considered as containing the edge of a building if the value of at least a cell adjacent thereto is zero.
5-c) Composition of a new matrix (F), of the same dimensions of matrix (M), containing in each cell the corresponding value of matrix (M) if in M this cell contains an edge, otherwise the value zero.
5-d) Computation of the surfaces of the building façade in the directions x and y, as sum of the values of the cells of the matrix (F) containing the edges;
5-e) orthogonal projection of the surfaces computed in step d) along the direction perpendicular to the wind direction and sum thereof (S).
5-f) Computation of the density of frontal area, defined as the ratio between the sum (S) and the total area of DEM.

Figura 1

Figura 2

Figura 3

Figura 4

Figura 5

**Europäisches Patentamt**
**European Patent Office**
**Office européen des brevets**

# EUROPEAN SEARCH REPORT

Application Number

EP 13 42 5063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Wikipedia: "Digital elevation model", INTERNET ARTICLE, 26 February 2013 (2013-02-26), XP055082642, Retrieved from the Internet: URL:http://en.wikipedia.org/w/index.php?title=Digital_elevation_model&oldid=540411981 [retrieved on 2013-10-04] * the whole document * | 1-4 | INV. G06Q10/04 |

-----

| | | | |
|---|---|---|---|
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 7 October 2013 | Krafft, Gerald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- operational environment usable for the development is the Matlab© Image Processing Toolbox. *MATLAB,* 1997